# EUROPEAN PATENT SPECIFICATION

(11) **EP 1 249 170 B1**
(45) Date of publication and mention of the grant of the patent: **14.09.2005**
(21) Application number: 01830257.0
(22) Date of filing: 13.04.2001
(51) Int. Cl.: A21D 13/08

(54) **A savoury snack and a method for the preparation thereof**
Verfahren zur Herstellung eines salzigen Snack-Produktes
Procédé de préparation d'un snack salé

(43) Date of publication of application: 16.10.2002
(73) Proprietor: BARILLA G. e R. Fratelli S.p.A., 43100 Parma (IT)
(72) Inventor: Buttini, Roberto, 43100 Parma (IT); Dangelico, Francesca, 43100 Parma (IT); Fornari, Sauro, 43100 Parma (IT)
(74) Representative: Ferreccio, Rinaldo

(56) References cited:
- EP-A- 0 486 736
- EP-A- 0 509 566
- EP-A- 0 681 785
- WO-A-00/59309
- US-A- 3 250 626
- US-A- 5 059 433

## Description

### Field of application

In its broader aspect the present invention relates to the field of the food industry.

In particular the present invention relates to a savory snack storable at room temperature in the absence of preservatives and to a method for the preparation thereof.

### Prior art

Sweet snacks, often provided with a creamy filling, industrially prepared and stored at room temperature in sealed packages, have been available on the market for a long time.

Analogous savory products, containing organoleptically characterizing ingredients, such as cheese, vegetables, tuna fish are not as popular, because of the difficulty in storing such snacks at room temperature and without preservatives.

Fresh savory filled bakery products are generally available in confectioner's shops; usually they are products such as puffs, vol-au-vents, etc. prepared through stuffing of a pastry half-finished product (for example, puff pastry), previously baked, with a savory cream (for example cheese cream).

There is no doubt that filled products prepared in this way have very good organoleptic properties but are characterized by the severe drawback of being easily perishable; therefore they need to be eaten within a few days, even when stored at refrigerator's temperature.

Furthermore, a post-baking filling process is necessary for their preparation, which is rather complicated and time consuming and hardly applicable in a production on industrial scale.

On the other end, usual savory creams cannot be used for stuffing the semi-finished product before baking, because such creams are poorly thermostable.

Known edible creams are characterized by a high moisture (40-60 %) that, on the one end, provides a pleasant feeling of freshness and softness to the palate but on the other end is responsible for the poor storability of the creams themselves. In fact, the high moisture content of the filling is followed by a high value of water activity A_{w} (0.90-0.99), which promotes the growth of bacteria and moulds and determines the migration of water towards the pastry envelope, which is characterized by a lower A_{w}; the envelope thus loses its palatal pleasantness.

Industrially, attempts have been made to overcome the drawback of an inadequate storability of filling creams by dramatically lowering their moisture content. However, by decreasing the moisture level down to 15 %, a significant lengthening of the shelf life is achieved, but the organoleptic characteristics of the filling creams are irremediably jeopardised.

Another way to obtain filled bakery products with a long shelf life is that of filling them with substantially anhydrous creams, i.e. with creams based on fats. In this way a final product is obtained, which is unbalanced from the nutritional point of view, organoleptically heavy and characterized by the above-mentioned water migration phenomenon.

A solution proposed in the prior art (US 4 752 494) contemplates the preparation of a thermostable cream with a low value of A_{w} (lower than 0.7) but with a moisture content comparable to that of the conventional creams, comprising a basis matrix consisting of a gelled aqueous dispersion containing Ca⁺⁺ ions, caseinate ions and maize syrup, fats, emulsifiers and flavourings. This cream is then used for filling a pastry semifinished product before baking it, and the filled semifinished product is finally baked.

However, such a cream is little suited for modifications and admixtures, since it is possible to change only the flavorings, and furthermore it is based on ingredients without a very high nutritional value, such as sodium or calcium caseinate and whey permeate, which forms the source of Ca⁺⁺ ions. Furthermore such a low A_{w} value (<0.7) induces migration of water from the pastry to the filling, thus creating a structural alteration of the components.

A further solution has been recently proposed by the Applicant in the Patent Application EP 00830195 which discloses a method for the production of a savory snack with a creamy filling, that can be stored at room temperature, comprising the steps of:
- preparing a mixture of creamy consistency having an A_{w} of 0.8-0.9 and a relative humidity of 25-30 %, comprising from 20 to 30 % (dry weight) of one or more dairy products and from 10 to 20 % of grated bread;
- preparing a dough semi-finished product for bakery products having an A_{w} of 0.8-0.9 and a relative humidity of 25-30 %;
- filling such a semi-finished product with the mixture;
submitting to leavening and baking the filled half-finished product so obtained.

US-A-3 250 626 discloses a cooked flour-based food product comprising a chemically-leavened dough sheet bonded to a layer of chemically-leavaned flavored paste.

The problem of providing a savory snack containing organoleptically characterizing ingredients, that can be stored at room temperature without preservatives has been now solved, in an alternative manner, by a method comprising the steps of:
- preparing a sheet of a natural yeast containing dough for bakery products having an A_{w} of 0.85-0.95 and a relative moisture of 25-35 %;
- preparing a batter containing at least one organoleptically characterizing ingredient, having an A_{w} of 0.85-0.95, a relative moisture of 30-35 %, a viscosity comprised between 3500 and 7000 mPa·s and a shearing stress (according to Casson) comprised between 30 and 60 Pa.;
- laying a layer of said batter onto said sheet in a weight amount lower than or equal to 67 % of the weight of said sheet and rolling up the sheet onto the batter layer, thus obtaining a semi-finished product;
- subjecting said semi-finished product to leavening and baking.

The dough sheet is preferably obtained from "danish" pastry.

The batter contains instead baking powder.

The amount in weight of the layer of batter corresponds, preferably, to 40-60 % of the weight of the sheet.

The organoleptically characterizing ingredients may consist of cheese, vegetables (such as asparaguses, artichokes, tomatoes), pot-herbs (such as rosemary, sage, marjoram, chives), fish (such as tuna fish, salmon), pork salted meat of any kind (such as ham), meats and generally speaking all those ingredients which are usually employed in the preparation of canapès, vol-au-vents, sandwiches and savory snacks in general.

Such ingredients may be used as fresh, pasteurized, deep-frozen, concentrated, dehydrated or freeze-dried products in order to include them in the batter.

The savory snack obtained through the method according to the present invention has a relative moisture comprised between 20 and 26 % and an A_{w} of 0.80 - 0.88.

In particular, the layers of the snack obtained from the sheet have an A_{w} equal to 0.80 - 0.85 and those obtained from the batter an A_{w} of 0.85-0.90.

It is very important that the sheet and the batter layer have the above-indicated water activity and humidity content values, since in this way the water activity will be uniform in the various layers of the final baked product and water and color migration phenomena will not take place between the various layers.

Then, the weight ratio between the batter and the sheet is very important, since an excessive amount of batter would determine an inadequate expansion of the naturally leavening dough and would cause the formation of voids inside the final snack.

Finally, the viscosity of the batter must be controlled within the above-indicated values, since a too low viscosity would determine an excessive flowability and the tendency to overflow both during the rolling and the baking steps. On the contrary, a too high viscosity would deteriorate the structural-organoleptic characteristics of the finished product and compromise the machinability of the batter and its suitability to be laid on.

The savory snack obtained with the method according to the present invention has alternated pastry layers of very different consistency - very soft and humid the one coming from the baking of the batter, tougher and more resistant the one deriving from the baking of the dough sheet - which is very pleasant at taste.

In the savory snack according to the present invention the organoleptically characterizing ingredients, instead of being in a creamy filling, are incorporated in the layers of soft pastry. In this way, the storability problems that are constantly observed in the savory snacks with creamy filling are thoroughly eliminated, without this implying a decrease of the taste and flavor of the finished product.

Further on, since there is no creamy filling, the snack according to the present invention has a reduced content of fats and in its whole is by far a more balanced food from the nutritional point of view with respect to the savory snacks with creamy filling known to date.

Further advantages of the method according to the present invention will appear from the examples provided as an illustration only, without any limiting purposes.

### Detailed description of the invention

### EXAMPLE 1

| Danish pastry | |
|---|---|
| Wheat flour | 47 % |
| Water | 19 % |
| Eggs | 9 % |
| Natural yeast | 8 % |
| Margarine | 5 % |
| Glucose syrup | 4 % |
| Sugar | 3 % |
| Powdered cheese | 3 % |
| Brewer's yeast | 2 % |

Using 100 parts of such dough and 30 parts of margarine a sheet of "danish" pastry was prepared according to techniques known to those skilled in the art.

The so obtained sheet had a relative moisture of 30 % and an A_{w} of 0.95.

| Batter | |
|---|---|
| Wheat flour | 30 % |
| Vegetable oil | 20 % |
| Glucose syrup | 20 % |
| Tomato concentrate | 15 % |
| Eggs | 10 % |
| Water | 4 % |
| Flavors | 1 % |

The preparation of the batter has been carried out by means of a planetary kneader, premixing part of the fatty phase, optionally admixed with flavors, with glucose syrup, then incorporating the eggs, water and tomato concentrate, which was previously seasoned with oil while warm, and finally adding the powders and carrying out the mixing until a creamy mixture was obtained. This had a measured viscosity of 6000 mPa·s and a shearing stress tau at 25 °C equal to 50 Pa (according to Casson).

The relative moisture of the batter so obtained was equal to about 30 % and A_{w} was equal to 0.85.

By rolling the danish dough, sheets having a thickness of 3 mm were obtained, onto which a layer of batter was laid, having a thickness of 2 mm. It has been found that the weight ratio between batter and sheet per surface unit was equal to 0.5.

At this point, a flap of each sheet of danish dough covered with batter has been lifted and folded inwards in such a way as to start the rolling up, at the end of which a semi-finished product of tubular shape was obtained, that showed, in its section, alternate spirals of different colors.

The semi-finished product thus obtained was finally baked in oven at 220 °C for 15 minutes, providing the final savory snack, that had a moisture content of 24 % and A_{w} equal to 0.86. The layers obtained from the danish dough and those obtained from the batter had A_{w} values equal to 0.83 and 0.88, respectively.

The snack has been stored in sealed packages made of polypropylene for two months in order to evaluate its storability. After such a period, the snack was unexceptionable from the microbiological point of view and did not exhibit any trace of humidity and color migration between the various layers.

After such a period the consistency has been evaluated through SMS-TEE analysis (double wedge) obtaining shearing stress and elasticity values equal to 57.7 and 0.2, respectively, that is to say values which are absolutely comparable to those of the conventional sweet snacks stored in identical experimental conditions. A further confirmation has been obtained from the SMS-TEE analysis with a cylindrical probe, which provided shearing stress and elasticity values equal to 8.3 and 0.2 respectively.

### EXAMPLE 2

| Batter | |
|---|---|
| Wheat flour | 30 % |
| Vegetable oil | 20 % |
| Glucose syrup | 15 % |
| Artichokes pastry | 15 % |
| Eggs | 10 % |
| Whey proteins | 5 % |
| Water | 4 % |
| Flavors | 1 % |

The preparation of the batter has been carried out as in example 1, just replacing the tomato concentrate with a paste of artichokes previously chopped up, centrifuged and seasoned with oil and flavors while still warm.

According to specific measurements, the viscosity of the batter has been found equal to 4000 mPa·s and its shearing stress tau at 25 °C equal to 35 Pa (according to Casson).

The relative moisture of the batter so obtained was about 34 % and A_{w} was equal to 0.92.

Starting from such a batter and from the same danish dough described in example 1, semi-finished products were prepared, in the same way as described in example 1, which were then submitted to baking in oven at 210°C for 15 minutes, providing the final savory snack. This had a moisture content and a water activity equal to 24 % and 0.86 respectively.

### EXAMPLE 3

| Batter | |
|---|---|
| Wheat flour | 30 % |
| Vegetable oil | 20 % |
| Glucose syrup | 20 % |
| Deep-frozen asparaguses | 10 % |
| Eggs | 10 % |
| Whey proteins | 5 % |
| Water | 4 % |
| Flavors | 1 % |

The preparation of the batter has been carried out as in example 1, just replacing the tomato concentrate with a semi-finished product of asparaguses chopped up and deep-frozen in IQF.

According to specific measurements, the viscosity of the batter has been found equal to 5000 mPa·s and its shearing stress tau at 25 °C equal to 50 Pa (according to Casson).

The relative moisture of the batter so obtained was about 33 % and A_{w} was equal to 0.93.

Starting from such a batter and from the same danish dough described in example 1, semi-finished products were prepared, in the same way as described in example 1, submitting them afterwards to baking in oven at 220°C for 15 minutes, thus providing the final savory snack. This had a moisture content and a water activity equal to 24 % and 0.86 respectively.

## Claims

1. A method for the production of a savory snack containing organoleptically **characterizing** ingredients and storable at room temperature, comprising the steps of:
- preparing a sheet of a natural yeast containing dough for bakery products having an A_{w} of 0.85-0.95 and a relative moisture of 25-35 %;
- preparing a batter containing at least one organoleptically **characterizing** ingredient, having an A_{w} of 0.85-0.95, a relative moisture of 30-35 %, a viscosity comprised between 3500 and 7000 mPa·s and a shearing stress (according to Casson) comprised between 30 and 60 Pa.;
- laying a layer of said batter onto said sheet in a weight amount lower than or equal to 67 % of the weight of said sheet and rolling up the sheet onto the layer of batter, thus obtaining a semi-finished product;
- subjecting said half-finished product to leavening and baking.

2. A method according to claim 1, wherein said natural yeast containing dough is a "danish" dough.

3. A method according to claim 1 or 2, wherein the amount in weight of said layer of batter corresponds to 40-60 % of the weight of said sheet.

4. A method according to anyone of the preceding claims, wherein said at least one organoleptically **characterizing** ingredient is chosen among the group comprising cheese, vegetables, pot-herbs, pork salted meat of any kind, meat, fish.

## Patentansprüche

1. Verfahren zur Herstellung eines pikanten Snacks, der organoleptisch kennzeichnende Zutaten enthält und bei Raumtemperatur gelagert werden kann, folgende Schritte umfassend:
- Zubereiten einer natürliche Hefe enthaltenden Lage aus Teig für Backwaren mit einer Wasseraktivität A_{w} von 0,85 bis 0,95 und einer relativen Feuchtigkeit von 25 bis 35 %;
- Zubereiten einer wenigstens eine organoleptisch kennzeichnende Zutat enthaltenden Rührmasse mit einer Wasseraktivität A_{w} von 0,85 bis 0,95, einer relativen Feuchtigkeit von 30 bis 35 %, einer Viskosität zwischen 3500 und 7000 mPa·s und einer Scherbeanspruchung (nach Casson) zwischen 30 und 60 Pa.;
- Auftragen einer Schicht der Rührmasse auf die Lage in einem Gewichtsanteil von kleiner oder gleich 67 % des Gewichtes der Lage, und Zusammenrollen der Lage mit der darauf befindlichen Schicht aus Rührmasse, wodurch ein Halbfertigprodukt erhalten wird;
- Gehenlassen des Halbfertigprodukts und Ausbacken des Halbfertigprodukts.

2. Verfahren nach Anspruch 1, wobei der natürliche Hefe enthaltende Teig ein "dänischer" Teig ist.

3. Verfahren nach Anspruch 1 oder 2, wobei der Gewichtsanteil der Schicht aus Rührmasse 40 bis 60 % des Gewichtes der Lage entspricht.

4. Verfahren nach einem der vorhergehenden Ansprüche, wobei die wenigstens eine organoleptisch kennzeichnende Zutat ausgewählt ist aus der Gruppe, die Käse, Gemüse, Küchenkräuter, gesalzenes Schweinefleisch jeglicher Art, Fleisch und Fisch umfasst.

## Revendications

1. Procédé pour la production d'un produit d'alimentation rapide salé, contenant des ingrédients à caractère organoleptique et pouvant être stocké à température ambiante, comprenant les étapes de :
- préparation d'une feuille d'une pâte contenant une levure naturelle pour des produits de boulangerie ayant une activité d'eau de 0,85-0,95 et une humidité relative de 25-35 % ;
- préparation d'une pâte à cuire contenant au moins un ingrédient à caractéristique organoleptique ayant une activité d'eau de 0,85-0,95, une humidité relative de 30-35 %, une viscosité comprise entre 3500 et 7000 mPa·s et une contrainte de cisaillement (selon Casson) comprise entre 30 et 60 Pa ;
- dépôt d'une couche de ladite pâte à cuire sur ladite feuille en une quantité pondérale inférieure ou égale à 67 % du poids de ladite feuille et enroulement de ladite feuille sur la couche de pâte à cuire, permettant d'obtenir ainsi un produit semi-fini ;
- soumettre ledit produit semi-fini au levage et à la cuisson.

2. Procédé selon la revendication 1, dans lequel ladite pâte contenant une levure naturelle est une pâte « danoise ».

3. Procédé selon la revendication 1 ou 2, dans lequel la quantité en poids de ladite couche de pâte à cuire correspond à 40-60 % en poids de ladite feuille.

4. Procédé selon l'une quelconque des revendications précédentes, dans lequel ledit au moins un ingrédient à caractère organoleptique est choisi dans le groupe contenant du fromage, des légumes, des herbes potagères, du porc salé de tout type, de la viande, du poisson.
